# DEMANDE DE BREVET EUROPEEN

(11) **EP 0 721 246 A1**
(43) Date de publication de la demande: **10.07.1996**
(21) Numéro de dépôt: 95402899.9
(22) Date de dépôt: 21.12.1995
(51) Int. Cl.: H02G 15/007, G02B 6/44

(54) **Dispositif de fixation, de reprise de masse et d'étanchéité pour câble optique**

(30) Priorité: 09.01.1995 FR 9500161
(71) Demandeur: FRANCE TELECOM, 75015 Paris (FR)
(72) Inventeur: Crespel, Daniel, F-22300 Lannion (FR); Louboutin, Jean-Pierre, F-22560 Trebeurden (FR)
(74) Mandataire: Armengaud Ainé, Alain

(57) **Abrégé**

Ce dispositif se caractérise en ce qu'il comporte un organe d'immobilisation (12) par serrage de la gaine (2) du câble (1) par l'extérieur de celle-ci, au moins un bouchon creux (13, 14,), apte à coiffer et éventuellement à être serti sur une partie d'un élément de renfort (3, 4), ce bouchon comportant une collerette (28), débordante ou non (28) en appui contre une surface plane ménagée à l'extrémité de la gaine, et un ensemble de blocage (15) en prise sur le bouchon, formé de deux mâchoires opposées (29, 30), des moyens (16, 17) étant en outre prévus pour rapprocher l'ensemble de blocage en prise sur le bouchon vis-à-vis de l'organe d'immobilisation de la gaine, afin d'écraser localement celle-ci par la collerette du bouchon, en réalisant l'étanchéité vis-à-vis de l'extérieur de l'élément de renfort s'étendant dans l'épaisseur de la gaine, parallèlement à son axe longitudinal.

## Description

La présente invention est relative à un dispositif de fixation, de reprise de masse et d'étanchéité de l'extrémité ou de la partie courante d'un câble comprenant au moins un module optique, constitué d'une ou d'un ensemble de fibres optiques indépendantes ou assemblées en ruban, ce dispositif comportant une gaine de protection externe à l'intérieur de laquelle est disposé au moins un élément de renforcement, destiné notamment à éviter que des efforts exercés sur le câble ne soient transmis au module optique situé à l'intérieur de la gaine.

Dans les solutions classiques actuelles de câbles de ce genre, les fibres optiques sont le plus généralement directement disposées dans la partie centrale de la gaine qui se présente comme un tube renforcé ou encore dans des passages parallèles voisins mais à l'intérieur de la gaine.

Les renforts, métalliques ou non, sont de préférence diamétralement opposés et incorporés dans la gaine lors de sa fabrication par extrusion.

Notamment quoique non exclusivement, ces renforts peuvent être constitués par des torons en acier qui s'ils présentent une résistance mécanique élevée, ne sont pas étanches dans leur direction longitudinale, de telle sorte que, à l'extrémité du câble où les fibres optiques du ou des modules contenus dans la gaine, peuvent être réunies par des épissures appropriées à un ou plusieurs appareils d'utilisation, ou un autre câble (dans le cas de raccordement de deux extrémités de câbles en ligne), ou encore en partie courante de ce câble dans une région dénudée de celui-ci suite à l'enlèvement d'une fraction de la gaine pour permettre un accès au module optique et un raccordement en T sur une ou plusieurs des fibres de celui-ci sans sectionner les fibres restantes, l'humidité extérieure peut cheminer le long de ces torons, ce qui présente de graves inconvénients.

L'application d'un matériau en forme de gel autour des renforts dans les zones où la gaine est dénudée, peut éviter au moins en partie cet inconvénient mais risque de polluer le boîtier ou autre organe de raccordement contenant les épissures de liaison des fibres optiques.

Par ailleurs, dans les solutions classiques, en bout de câble ou dans une zone intermédiaire de celui-ci, il est nécessaire de réaliser un amarrage sûr de ce câble, en particulier par l'ancrage convenable de ses renforts, en procurant en outre, dans le cas où ces derniers sont métalliques, une mise à la masse efficace.

Or, dans les réalisations connues, usuelles dans la pratique à ce jour, les techniques d'amarrage mises en oeuvre ne permettent pas une immobilisation des renforts dans la direction longitudinale du câble, selon le prolongement naturel de ces renforts, mais utilisent des moyens de blocage décalés latéralement, ce qui entraîne généralement un phénomène de torsion et/ou de courbure de la gaine et des renforts, et peut même générer un sectionnement de cette gaine, en créant des contraintes sur les fibres optiques elles-mêmes, surtout si les renforts sont amenés à se croiser par rapport à l'axe de sortie des fibres optiques.

La présente invention a pour objet un dispositif de fixation et d'étanchéité pour câble optique qui évite ces inconvénients, en permettant d'une part d'immobiliser les renforts à l'intérieur de la gaine dans leur direction naturelle sans induire d'efforts sur les fibres optiques elle-mêmes, ce dispositif permettant en outre de réaliser sur ces renforts, au droit des zones où ils émergent hors de la gaine préalablement sectionnée, indépendamment des fibres optiques qui conservent leur totale intégrité, une étanchéité de niveau élevé, qui évite la pénétration d'humidité à l'intérieur de la gaine, ou à l'intérieur du contenant, lors d'un accident sur la partie courante du câble.

L'invention concerne également un dispositif qui, dans le cas où les renforts de la gaine sont métalliques, permet une mise à la masse efficace de ceux-ci, les moyens mis en oeuvre étant en eux-même indépendants de la structure du ou des modules optiques constitués par les fibres proprement dites, celles-ci pouvant être réparties, soit en un module unique librement disposé dans une partie creuse s'étendant longitudinalement au centre de la gaine, soit en plusieurs modules parallèles, répartis dans des passages voisins, disposés de préférence symétriquement par rapport à l'axe de cette gaine, à l'intérieur de celle-ci.

L'invention a enfin pour but de procurer un dispositif qui soit compact et en particulier dont l'encombrement soit suffisamment limité pour qu'il puisse être le cas échéant inséré ou associé dans un organe annexe fixé par son intermédiaire en bout du câble, pour permettre de tirer celui-ci lors de sa pose en conduite.

A cet effet, le dispositif considéré, pour la fixation, la reprise de masse et l'étanchéité d'un câble comportant au moins un module optique, une gaine externe, notamment en matériau plastique relativement déformable, de forme générale cylindrique, entourant librement le module optique constitué par un ensemble de fibres voisines, indépendantes ou de préférence logées dans une enveloppe de confinement, et au moins un élément de renfort présentant une résistance mécanique élevée, en particulier à la traction pour reprendre et absorber les efforts exercés sur le câble sans les reporter sur le module optique, se caractérise en ce qu'il comporte un organe d'immobilisation par serrage de la gaine par l'extérieur de celle-ci, au moins un bouchon creux de protection et d'étanchéité, apte à coiffer et éventuellement à être serti sur une partie de l'élément de renfort dépassant de l'extrémité frontale de la gaine préalablement découpée pour dénuder le module optique, ce bouchon comportant une collerette, débordante ou non, en appui contre une surface plane ménagée à l'extrémité de la gaine, et un ensemble de blocage en prise sur le bouchon, formé de deux mâchoires opposées coopérant entre elles en rapprochement sur la surface externe du bouchon selon un plan diamétral passant par l'axe de celui-ci, des moyens étant en outre prévus pour rapprocher l'ensemble de blocage en prise sur le bouchon vis-à-vis de l'organe d'immobilisation de la gaine afin d'écraser localement celle-ci par la collerette du bouchon, en réalisant l'étanchéité vis-à-vis de l'extérieur de l'élément de renfort s'étendant dans l'épaisseur de la gaine, parallèlement à son axe longitudinal.

De préférence, l'élément de renfort est constitué par au moins un fil métallique, notamment en acier, se présentant sous la forme d'un ou plusieurs torons, droits ou torsadés. En variante, le renfort peut être réalisé en un matériau composite, en polymère armé, du genre d'un fil ou d'une mèche en matériaux organiques, minéraux ou métalliques, incluant une armature constituée de fibres naturelles ou synthétiques, notamment du genre fibres de verre, ou fil mèche en matériau plastique.

De préférence également, la gaine externe entourant le module optique est réalisée en polyéthylène à haute densité. Le bouchon creux est pour sa part constitué d'un matériau métallique, notamment en cuivre ou en aluminium.

Dans un mode de réalisation préféré, la gaine comporte deux fils de renfort parallèles, diamétralement opposés par rapport à un module optique unique disposé dans l'axe de cette gaine de forme tubulaire, l'extrémité de chacun de ces deux renforts étant associée à un bouchon creux de protection et d'étanchéité.

Selon une caractéristique particulière, un joint plat est monté entre la surface plane à l'extrémité de la gaine et la collerette du bouchon creux de protection et d'étanchéité de chaque renfort. De préférence, ce joint est réalisé en un matériau plastique, analogue ou différent de celui de la gaine. Notamment, ce joint peut être réalisé en un polymère ou un élastomère.

Selon une autre caractéristique, les moyens pour rapprocher l'organe d'immobilisation et l'ensemble de blocage en prise sur le bouchon, sont constitués par au moins une et de préférence deux vis longitudinales, parallèles à l'axe de la gaine, ces vis étant autotaraudeuses ou traversant l'élément de blocage et étant engagées dans des alésages taraudés de l'organe d'immobilisation ou vice versa, de telle sorte que la rotation de la vis serre l'un vers l'autre l'organe et l'élément.

Avantageusement, l'organe d'immobilisation de la gaine est constitué de deux parties accolées, serrées mutuellement l'une contre l'autre en emprisonnant la gaine entre elles, le rapprochement de ces deux parties étant obtenu par des vis, s'étendant perpendiculairement à l'axe de la gaine.

Selon une autre variante, la gaine comporte un conduit central dans lequel s'étend le module optique, disposé coaxialement à l'intérieur de l'élément de renfort qui présente un profil tubulaire et est logé dans ce conduit, le bouchon de protection et d'étanchéité étant percé axialement d'un trou dans son fond opposé à sa collerette d'appui pour le libre passage du module.

Selon le cas, le joint et le bouchon sont enfilés sur l'extrémité de l'élément de renfort lorsque la gaine est dénudée à une extrémité. En cas de piquage latéral réalisé sur le module optique, le joint et le bouchon sont constitués chacun de deux parties, propres à être accolées ensemble pour entourer le module optique. Le cas échéant, le joint peut être coupé latéralement, ses bords étant raccordés mutuellement par un profil en omega ou autre.

D'autres caractéristiques d'un dispositif de fixation, de reprise de masse et d'étanchéité de l'extrémité d'un câble optique, apparaîtront encore à travers la description qui suit de plusieurs exemples de réalisation, donnés à titre indicatif et non limitatif, en référence aux dessins annexés sur lesquels :
- La Figure 1 est une vue en perspective partiellement éclatée d'un dispositif conforme à un premier mode de réalisation de l'invention.
- La Figure 2 est une vue en coupe axiale, vue de dessus des différentes parties du dispositif de la Figure 1.
- Les Figures 3 et 4 sont des vues en coupe transversale selon les lignes respectivement III-III et IV-IV de la Figure 2.
- La Figure 5 est une vue de face du joint d'étanchéité mis en oeuvre dans le mode de réalisation selon les Figures 1 à 4.
- La Figure 6 est une vue en coupe longitudinale d'une variante de réalisation.
- La Figure 7 illustre un montage comportant deux dispositifs de fixation et d'étanchéité conformes au premier mode de réalisation selon les Figures 1 à 5, dans lequel on réalise un piquage latéral du module optique du câble avec un autre module analogue d'un second câble indépendant du premier.
- La Figure 8 est une vue en perspective et en coupe d'un câble à fibres optiques comportant un élément de renfort particulier.
- Les Figures 9 et 10 sont des vues respectivement en élévation et en coupe transversale du dispositif selon l'invention, adapté à la fixation du câble selon la Figure 8.
- Les Figures 11 et 12 sont des vues analogues aux Figures 9 et 10, mais relatives à une autre variante de réalisation du câble à fibres optiques.

On a repris sur ces Figures des chiffres de référence identiques pour désigner des organes semblables de l'une à l'autre.

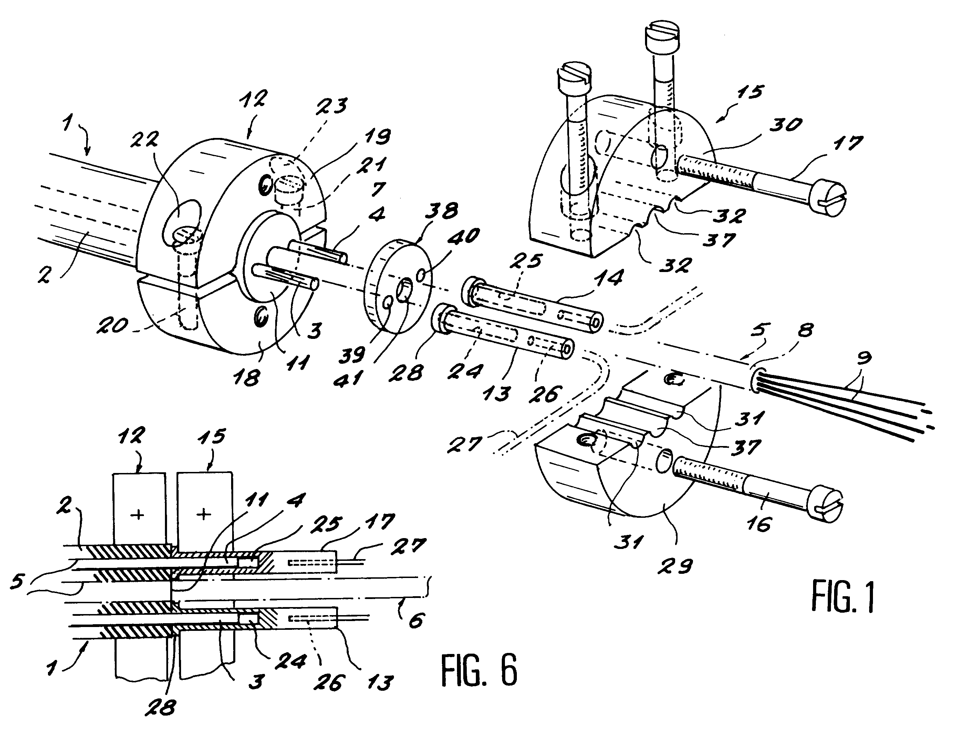

Dans le premier exemple de réalisation représenté sur les Figures 1 à 5, la référence 1 désigne de façon générale un câble à fibres optiques, lequel comporte dans cet exemple, de sa périphérie vers son axe central, une gaine de protection 2, généralement réalisée en un matériau plastique approprié, notamment en polyéthylène à haute densité, la gaine pouvant éventuellement être elle-même recouverte d'une enveloppe de protection extérieure (non représentée).

Dans l'épaisseur de la gaine, de préférence disposés symétriquement de part et d'autre de son axe central, sont logés deux éléments de renfort, respectivement 3 et 4, se présentant chacun sous la forme d'un fil métallique, ou d'un toron de fils, avantageusement en acier, droits ou torsadés, de manière à conférer à ces renforts une résistance mécanique élevée et surtout à permettre d'absorber les efforts de traction, de compression, voire de flexion et limiter selon le cas les phénomènes de dilatation thermique, qui peuvent être exercés sur le câble lui-même.

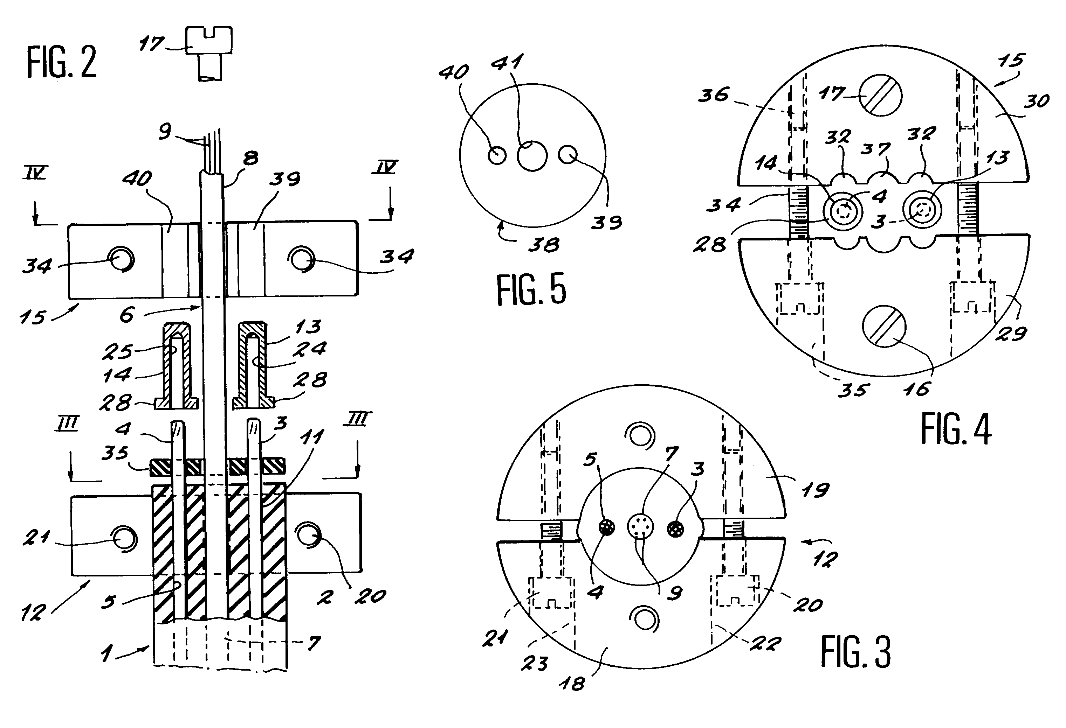

Les fils de renfort 3 et 4 sont de préférence mis en place dans la gaine lors de la fabrication de celle-ci, en étant logés chacun à l'intérieur d'un passage 5 prévu dans l'épaisseur de la gaine 2, les deux passages correspondants étant parallèles l'un à l'autre et présentant une dimension diamétrale adaptée à l'encombrement des fils métalliques qui peuvent jouer légèrement dans ces passages, lesquels dès lors ne sont pas entièrement étanches, à telle enseigne que, en bout de câble, lorsque la gaine de celui-ci est sectionnée comme illustré sur les Figures 1 et 2, l'humidité de l'air ambiant puisse éventuellement pénétrer entre chaque fil et la surface interne du passage correspondant dans la gaine, ce qui conduit aux inconvénients déjà mentionnés.

A noter que les fils de renfort 3 et 4 peuvent être réalisés en une autre matière que l'acier, par exemple au moyen d'un matériau composite formé de fibres ou mèches, liées ensemble par une résine polymérisable par exposition à la chaleur ou aux rayonnements, chaque fil pouvant en outre comporter une armature de raidissement, à base de fibres de verre notamment.

Dans la partie centrale de la gaine 2, est enfin disposé un module optique 6, qui s'étend dans un conduit 7 prévu selon l'axe du câble 1, un jeu suffisant étant ménagé autour du module 6 dans ce conduit, pour limiter toute réaction et effort de frottement de la gaine sur celui-ci.

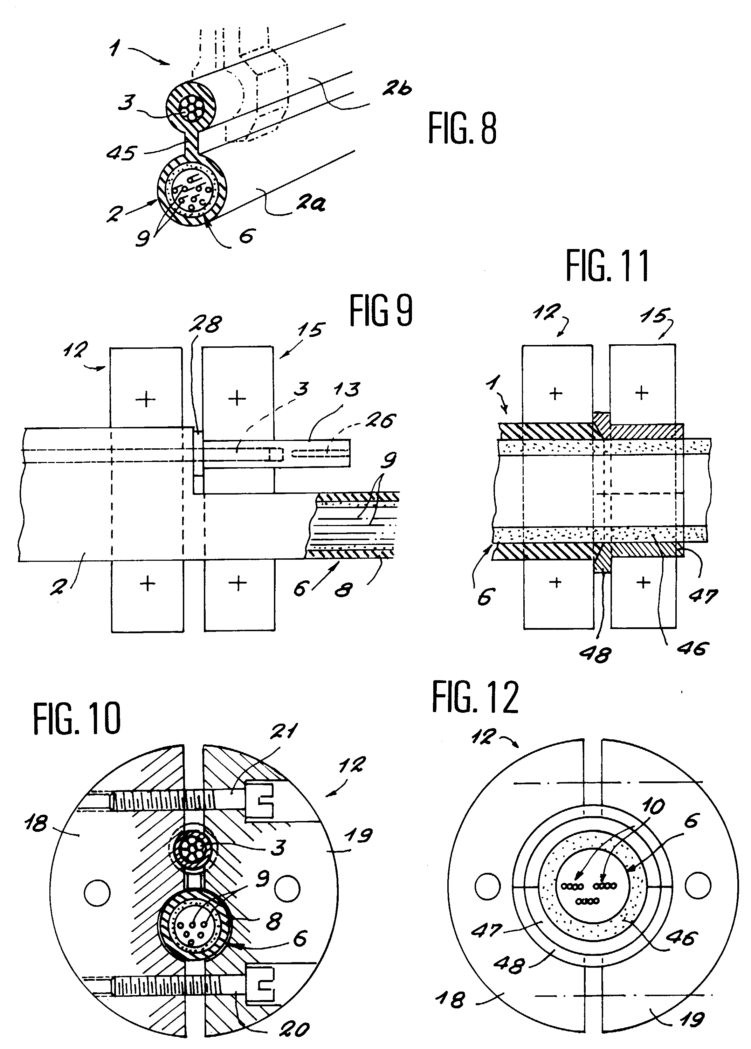

Le module optique 6 est constitué de façon en elle-même connue par une enveloppe de protection externe 8 à l'intérieur de laquelle s'étendent, selon la longueur du câble, une pluralité de fibres optiques 9, indépendantes ou éventuellement réunies ensemble à plusieurs, sous la forme alors de rubans de fibres 10, comme illustré par exemple dans la variante de la Figure 12. Un matériau de remplissage peut être prévu à l'intérieur de l'enveloppe 8 autour des fibres 9.

Conformément à l'invention, le câble 1 ainsi constitué est associé à un dispositif de fixation et d'étanchéité, apte notamment, comme représenté dans le premier exemple considéré sur les Figures 1 à 5, à être monté à une des extrémités du câble, dans une zone de celui-ci où la gaine 2 a été coupée transversalement ainsi que les deux renforts métalliques 3 et 4, qui débordent légèrement de la face sectionnée correspondante 11 de cette gaine, seul le module optique 6 étant laissé en l'état, en se prolongeant au-delà de son conduit 7 dans la gaine, une ou plusieurs des fibres 99 pouvant alors être extraites de l'enveloppe 8 et raccordées à un appareil d'utilisation quelconque ou à l'extrémité d'une autre fibre, ici non représentés.

Selon l'invention, le dispositif comporte un organe de serrage et d'immobilisation 12 de la gaine 2, des bouchons de protection creux, respectivement 13 et 14, pour les extrémités dépassantes des fils de renfort 3 et 4 et enfin un ensemble de blocage en prise sur ces bouchons, muni de vis de serrage 16 et 17, permettant de réaliser l'étanchéité du montage et en particulier d'éviter la pénétration de l'humidité extérieure à l'intérieur de la gaine ou son écoulement vers l'extérieur dans les passages 5 des fils de renforts.

De préférence, les bouchons de protection creux 13, 14 sont réalisés en un matériau métallique, notamment en cuivre ou en aluminium, de manière à pouvoir être aisément écrasés sur les extrémités des fils de renfort 3 et 4, comme exposé plus loin.

L'organe de serrage et d'immobilisation 12 est réalisé à l'aide de deux demi-bagues 18 et 19, hémicylindriques, aptes à s'assembler mutuellement autour de la gaine en venant serrer cette dernière par l'extérieur, le rapprochement des deux bagues selon le plan diamétral commun selon lequel elles s'adaptent sur la gaine, étant obtenu à l'aide de vis telles que 20 et 21 engagées de part et d'autre de cette gaine dans des perçages 22 et 23, perpendiculaires à ce plan prévu dans une des deux bagues, ces vis coopérant avec des alésages taraudés de l'autre bague ou vice versa.

Les bouchons creux de protection 13 et 14 sont prévus pour venir s'adapter par l'extérieur sur les extrémités des fils 3 et 4 et comportent à cet effet des logements borgnes internes désignés sur les dessins sous les références 24 et 25. Chaque bouchon est fermé à son extrémité opposée, laquelle peut néanmoins comporter un trou 26 non traversant, propre à recevoir l'extrémité d'un fil 27 de mise à la masse, qui s'engage dans ce trou à la manière d'une fiche, comme représenté sur la Figure 1 mais non sur la Figure 2 pour ne pas surcharger le dessin de celle-ci.

Chaque bouchon 13 et 14 comportent par ailleurs, à son extrémité dirigée vers la gaine 2, une collerette d'appui 28, permettant de réaliser l'étanchéité nécessaire au droit de cette gaine dans la zone où les fils de renfort 3 et 4 émergent légèrement de celle-ci.

L'ensemble de blocage 15 du dispositif comporte enfin deux mâchoires, respectivement 29 et 30, analogues aux demi-bagues 18 et 19 de l'organe d'immobilisation, mais comportant certaines dispositions spécifiques.

Notamment, les deux mâchoires 29 et 30 comportent dans leurs faces planes destinées à être rapprochées l'une de l'autre pour venir serrer entre elles les bouchons creux 13 et 14 des logements ouverts 31 et 32, hémicylindriques, et dont le diamètre correspond sensiblement à celui des bouchons, de telle sorte que, lorsque les deux mâchoires sont rapprochées mutuellement par le moyen de vis 33 et 34, s'étendant perpendiculairement aux faces planes de ces mâchoires et traversant à leur tour des perçages 35 dans l'une de celles-ci pour coopérer avec un alésage taraudé 36 prévu dans l'autre, les bouchons creux soient progressivement écrasés et ainsi sertis sur les extrémités des fils de renfort 3 et 4 engagées dans les logements borgnes 24, 25 de ces bouchons 13 et 14.

En partie centrale, les mâchoires 29 et 30 comportent chacune un évidement 37, de rayon plus grand que celui des logements 31 et 32 afin de permettre le libre passage du module optique 6 à travers l'ensemble de blocage 15.

Le dispositif se complète enfin à l'aide d'un joint plat 38 (voir Figure 5), de préférence réalisé en polymère ou élastomère, destiné à venir s'appliquer contre la surface d'extrémité 11 de la gaine 2 (voir Figure 2), ce joint se présentant sous la forme d'une rondelle munie de deux perçages latéraux, respectivement 39 et 40, permettant la traversée du joint par les fils de renfort 3 et 4 et un trou central 41 pour le passage du module optique 6.

Lors du montage, après avoir dénudé la gaine 2 au droit de sa face d'extrémité 11, en laissant dépasser les extrémités des fils de renfort 3 et 4, on met en place l'organe d'immobilisation 12 avec ses demi-bagues 18 et 19 venant serrer la gaine par l'extérieur.

Dans un second temps, on met en place le joint plat 38 de telle sorte que les fils 3 et 4 traversent les perçages 39 et 40 de celui-ci, le module optique 6 au centre de la gaine passant pour sa part librement dans le trou 41 de ce joint.

Dans la phase suivante, on enfile sur les extrémités des fils de renfort 3 et 4 les bouchons creux 13 et 14 à l'intérieur des logements 24 et 25 de ces derniers, jusqu'à ce que leur collerette 28 vienne s'appuyer contre la surface en regard du joint plat 38. Le cas échéant, on enfile les extrémités des fils de masse 27 dans les trous 26 de ces bouchons. Les bouchons 13 et 14 doivent être comprimés avant d'être immobilisés.

Dans l'étape qui suit, on met en place les deux mâchoires 29 et 30 sans serrer les bouchons 13 et 14, de telle sorte que ceux-ci puissent coulisser.

Dans la phase suivante, on commande la rotation des vis 16 et 17, de manière à assurer un rapprochement progressif vers l'organe d'immobilisation 12 de l'ensemble de blocage 15 des collerettes 28 des bouchons 13 et 14 en appui sur le joint 38, lui-même appliqué sur la face d'extrémité 11 de la gaine 2, venant obturer le jeu de montage entre les fils de renfort 3 et 4 et leurs passages 5 dans la gaine 2, en réalisant une étanchéité parfaite du montage.

Enfin, dans un dernier temps, on réalise, par l'action des vis 20 et 21, un serrage des deux mâchoires 29 et 30 précitées, de manière à venir serrer les bouchons 13 et 14 en réalisant un sertissage de ceux-ci sur les fils 3 et 4.

Dans ce montage, les éléments de renfort 3 et 4 restent immobilisés dans leur direction naturelle, parallèle à l'axe du câble 1, sans flexion sur ces fils due à une torsion latérale telle qu'elle est réalisée dans les solutions de l'art antérieur.

Par ailleurs, l'écrasement contrôlé du joint 38 sur l'extrémité plane 11 de la gaine 2 permet un écrasement limité de ce joint, qui permet d'obtenir grâce aux collerettes 28 des bouchons creux 13 et 14 une étanchéité parfaite, évitant toute pénétration d'humidité dans la gaine ou sortie de cette humidité du câble vers et dans le boîtier.

Avantageusement, au droit du conduit central 7 traversé par le module optique 6, on peut prévoir la mise en place d'une quantité appropriée d'un produit suffisamment fluide tel qu'un gel de pétrole ou de silicone, qui évite à nouveau la pénétration d'humidité à l'intérieur de ce conduit mais n'exerce aucun effort sur le module optique lui-même qui reste parfaitement libre vis-à-vis de sa gaine 2 et des éléments de renfort 3 et 4.

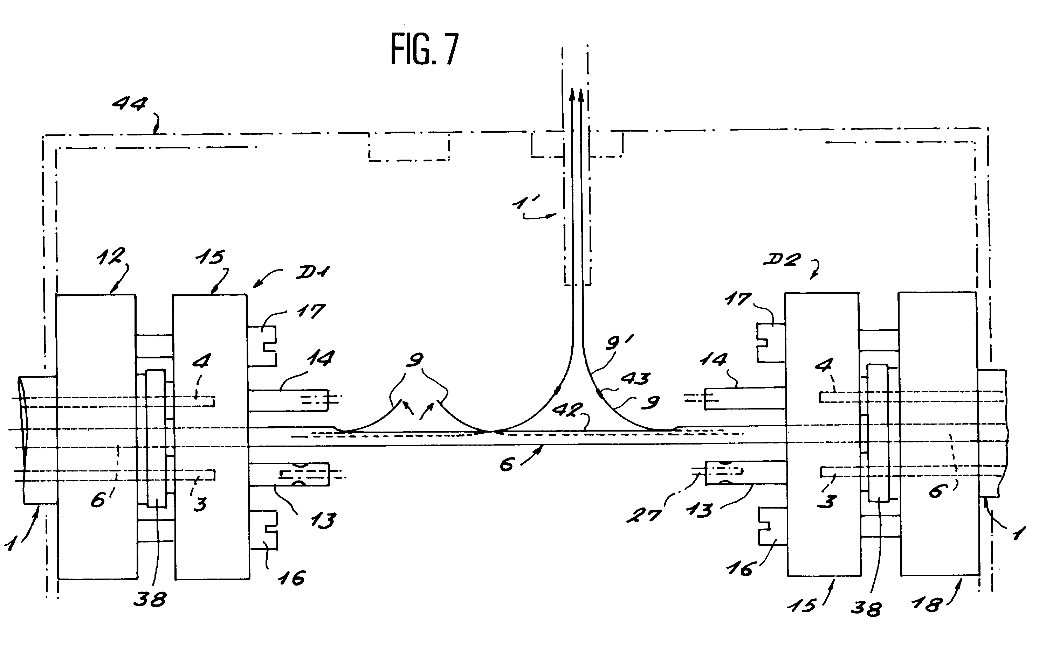

Dans une variante de réalisation illustrée sur la Figure 6, les collerettes 28 prévues aux extrémités des bouchons 13 et 14, coopèrent directement avec la face plane 11 ménagée en bout de la gaine 2 du câble 1 pour assurer l'étanchéité vis-à-vis des jeux prévus entre les passages 5 et les fils de renfort 3 et 4, en évitant l'utilisation dans ce cas du joint plat 38, envisagée dans la variante des Figures 1 à 5.

Dans l'un et l'autre des exemples précédents, on a prévu que la gaine 2 du câble 1 était sectionnée en bout de ce dernier afin de laisser libre le module optique 6 et de permettre aux fibres 9 contenues dans ce dernier d'être le cas échéant directement raccordées à d'autres fibres, voire à des appareils d'utilisation;

Le mode de réalisation illustré sur la Figure 7 correspond à une utilisation différente où le module optique 6 n'est pas sectionné transversalement mais seulement ouvert latéralement par une fente latérale 42, permettant d'extraire une quelconque des fibres 9 de ce module et de la relier par une épissure 43 à une fibre homologue 9' d'un câble 1', distinct du câble 1 lui-même. La Figure 7 illustre un tel montage comportant deux dispositifs, respectivement D1 et D2, pour un premier câble 1, chacun de ces dispositifs, conforme aux exemples de réalisation décrit, comprenant un organe d'immobilisation 12, un ensemble de blocage 15, un joint plat 38 et des vis 16 et 17 pour le rapprochement contrôlé de ces deux parties, afin de permettre, après sertissage des bouchons creux 13 et 14 sur les extrémités des renforts 3 et 4 du câble.

Dans ce cas, le module optique 6 n'est plus sectionné, le câble 1' étant raccordé par piquage avec le câble 1, les fibres 9 et 9' des deux câbles étant réunies par leurs épissures 43 comme représenté. De préférence, l'ensemble est monté dans un boîtier de raccordement extérieur 44.

Dans la variante illustrée sur la Figure 8, le câble 1 présente une forme particulière, la gaine 2 entourant à l'intérieur de deux parties distinctes 2a et 2b, respectivement le module optique 6 et un élément de renfort 3 qui est cette fois unique et déporté latéralement vis-à-vis de la zone où sont réparties les fibres optiques 9. Les deux parties 2a et 2b de la gaine sont réunies par une languette de liaison 45.

Dans cet exemple de réalisation, le dispositif comporte à nouveau un organe d'immmobilisation 12 et un ensemble de blocage 15, apte à sertir par l'extérieur le bouchon creux 13 qui entoure l'extrémité de l'élément de renfort 3. Dans ce cas, le module optique 6 n'est plus disposé axialement entre les demi-bagues 18 et 19 serrées l'une vers l'autre par les vis 20 et 21, mais décalé latéralement vis-à-vis de l'élément de renfort 3, comme le montrent les Figures 9 et 10.

Dans un autre mode de réalisation schématisé sur les Figures 11 et 12, le câble 1 comporte une gaine 2, mais un élément de renfort 46, de forme tubulaire, logé coaxialement à l'intérieur de la gaine en entourant le module optique 6.

Dans cette variante, l'élément de renfort traverse un bouchon creux 47, percé dans son fond pour laisser le libre passage du module optique 6, ce bouchon comportant une collerette 48 d'appui sur l'extrémité de la gaine pour réaliser l'étanchéité requise de la manière déjà exposée.

On réalise ainsi un dispositif de conception très simple qui présente les avantages déjà mentionnés, notamment d'une fixation dans l'axe des différents éléments du câble, en réalisant en outre au droit de ses éléments de renfort une parfaite étanchéité.

Bien entendu, il va de soi que l'invention ne se limite aux exemples décrits ci-dessus et représentés sur les dessins annexés ; elle en embrasse au contraire toutes les variantes entrant dans le cadre des revendications ci-annexées.

Notamment, dans le cas où le module optique n'est pas lui-même sectionné, c'est-à-dire lorsqu'une ou plusieurs fibres optiques de ce module, mais non la totalité de ces dernières sont prévues pour être raccordées avec d'autres fibres homologues d'un câble réalisant un piquage latéral sur le premier, il est clair que le joint 38, traversé par le module optique, ne peut être mis en place sur celui-ci que dans la mesure où il est préalablement coupé latéralement pour se disposer autour de l'enveloppe du module.

Dans ce cas, les bords du joint au droit de la coupe qu'il comporte sont avantageusement réunis mutuellement grâce à un profil en omega ou autre qui permet de les raccorder de façon sûre après que le joint ait été mis en place sur le module.

A noter que dans la variante selon les Figures 11 et 12, où le module optique traverse le bouchon de protection de l'élément de renfort, lui-même de forme tubulaire, le bouchon de protection 46 doit également être réalisé en deux parties s'accolant mutuellement autour de ce module.

Enfin, dans les exemples précédents, on a envisagé que les bouchons 13 et 14 comportent, à leur extrémité destinée à venir en appui sur le joint 38 ou sur la face d'extrémité plane 11 prévue en bout de la gaine 2, une collerette légèrement débordante 28, assurant une compression satisfaisante dans la zone d'étanchéité. En variante, cette collerette peut être directement constituée par l'extrémité de chaque bouchon 13, 14 ou 47, démuni d'épaulement transversal, le bouchon comportant alors avantageusement dans sa surface externe des reliefs ou des stries, de telle sorte que son déplacement en translation dans le sens de l'étanchéité à réaliser, puisse être assuré par les mâchoires 29 et 30, en prise directe sur ce ou ces bouchons.

## Revendications

1. Dispositif pour la fixation, la reprise de masse et l'étanchéité de l'extrémité d'un câble optique (1), comportant au moins un module optique (6), une gaine externe (2), notamment en matériau plastique relativement déformable, de forme générale cylindrique, entourant librement le module optique constitué par un ensemble de fibres voisines (9), indépendantes ou de préférence logées dans une enveloppe de confinement (8), et au moins un élément de renfort (3, 4) présentant une résistance mécanique élevée, en particulier à la traction pour reprendre et absorber les efforts exercés sur le câble sans les reporter sur le module optique, caractérisé en ce qu'il comporte un organe d'immobilisation (12) par serrage de la gaine par l'extérieur de celle-ci, au moins un bouchon creux (13, 14, 46) de protection et d'étanchéité, apte à coiffer et éventuellement à être serti sur une partie de l'élément de renfort dépassant de l'extrémité frontale de la gaine préalablement découpée pour dénuder le module optique, ce bouchon comportant une collerette (28), débordante ou non, en appui contre une surface plane ménagée à l'extrémité de la gaine, et un ensemble de blocage (15) en prise sur le bouchon, formé de deux mâchoires opposées (29, 30) coopérant entre elles en rapprochement sur la surface externe du bouchon selon un plan diamétral passant par l'axe de celui-ci, des moyens (16, 17) étant en outre prévus pour rapprocher l'ensemble de blocage en prise sur le bouchon vis-à-vis de l'organe d'immobilisation de la gaine, afin d'écraser localement celle-ci par la collerette du bouchon en réalisant l'étanchéité vis-à-vis de l'extérieur de l'élément de renfort s'étendant dans l'épaisseur de la gaine, parallèlement à son axe longitudinal.

2. Dispositif selon la revendication 1, caractérisé en ce que l'élément de renfort (3, 4) est constitué par au moins un fil métallique, notamment en acier, se présentant sous la forme d'un ou plusieurs torons, droits ou torsadés.

3. Dispositif selon la revendication 1, caractérisé en ce que l'élément de renfort (3, 4) est réalisé en un matériau composite, en polymère armé, du genre d'un fil ou d'une mèche en matériaux organiques, minéraux ou métalliques, incluant une armature constituée de fibres naturelles ou synthétiques, notamment du genre fibres de verre ou fil mèche en matériau plastique.

4. Dispositif selon l'une quelconque des revendications 1 à 3, caractérisé en ce que la gaine externe (2) entourant le module optique (6) est réalisée en polyéthylène à haute densité.

5. Dispositif selon l'une quelconque des revendications 1 à 4, caractérisé en ce que le bouchon creux (13, 14, 46) est constitué d'un matériau métallique, notamment en cuivre ou en aluminium.

6. Dispositif selon l'une quelconque des revendications 1 à 5, caractérisé en ce que la gaine (2) comporte deux fils de renfort parallèles (3, 4), diamétralement opposés par rapport à un module optique unique (6) disposé dans l'axe de cette gaine de forme tubulaire, l'extrémité de chacun de ces deux renforts étant associée à un bouchon creux de protection et d'étanchéité (13, 14).

7. Dispositif selon l'une quelconque des revendications 1 à 6, caractérisé en ce qu'un joint plat (38) est monté entre la surface plane (11) à l'extrémité de la gaine et la collerette (28) du bouchon creux de protection et d'étanchéité (13, 14) de chaque renfort (3, 4).

8. Dispositif selon la revendication 7, caractérisé en ce que le joint (38) est réalisé en un matériau plastique, analogue ou différent de celui de la gaine.

9. Dispositif selon la revendication 8, caractérisé en ce que le joint est réalisé en un polymère ou un élastomère.

10. Dispositif selon l'une quelconque des revendications 1 à 9, caractérisé en ce que les moyens pour rapprocher l'organe d'immobilisation (12) et l'ensemble de blocage (15) en prise sur le bouchon creux (13, 14), sont constitués par au moins une et de préférence deux vis longitudinales (16, 17), parallèles à l'axe de la gaine, ces vis étant autotaraudeuses ou traversant l'élément de blocage et étant engagées dans des alésages taraudés de l'organe d'immobilisation ou vice versa, de telle sorte que la rotation de la vis serre l'un vers l'autre l'organe et l'élément.

11. Dispositif selon l'une quelconque des revendications 1 à 10, caractérisé en ce que l'organe d'immobilisation (12) de la gaine (2) est constitué de deux parties accolées (18, 19), serrées mutuellement l'une contre l'autre en emprisonnant la gaine entre elles, le rapprochement de ces deux parties étant obtenu par des vis (20, 21), s'étendant perpendiculairement à l'axe de la gaine.

12. Dispositif selon l'une quelconque des revendications 1 à 11, caractérisé en ce que la gaine (2) comporte un conduit central dans lequel s'étend le module optique (6), disposé coaxialement à l'intérieur de l'élément de renfort (46) qui présente un profil tubulaire et est logé dans ce conduit, le bouchon de protection et d'étanchéité (47) étant perçé axialement d'un trou dans son fond opposé à sa collerette d'appui (48) pour le libre passage du module.

13. Dispositif selon l'une quelconque des revendications 1 à 12, caractérisé en ce que le joint (38) et le bouchon (13, 14) sont enfilés sur l'extrémité de l'élément de renfort (3, 4) lorsque la gaine est dénudée à une extrémité.

14. Dispositif selon l'une quelconque des revendications 1 à 12, caractérisé en ce que, en cas de piquage latéral réalisé sur le module optique (6), le joint (38) et le bouchon (13, 14) sont constitués chacun de deux parties, propres à être accolées ensemble pour entourer le module optique.

15. Dispositif selon la revendication 14, caractérisé en ce que le joint (38) est coupé latéralement, ses bords étant raccordés mutuellement par un profil en omega ou autre.

16. Dispositif selon la revendication 5, caractérisé en ce que chaque bouchon métallique (13, 14, 47) est réuni à un fil (27) de mise à la masse du câble (1).

17. Dispositif selon la revendication 16, caractérisé en ce que le fil (27) est engagé à la manière d'une fiche, dans un trou (26) non traversant, prévu à l'extrémité des bouchons (13, 14), opposée à la collerette (28).

18. Dispositif selon la revendication 1, caractérisé en ce que chaque bouchon creux (13, 14, 47) comporte une surface externe striée ou munie de reliefs, en prise avec les mâchoires (29, 30) de l'ensemble de blocage (15).
